# EUROPEAN PATENT APPLICATION

(11) **EP 3 270 280 A1**
(43) Date of publication of application: **17.01.2018**
(21) Application number: 17180735.7
(22) Date of filing: 11.07.2017
(51) Int. Cl.: G06F 3/0488, G06F 1/16, G06F 3/0354

(54) **INFORMATION PROCESSING DEVICE, MISOPERATION REDUCING METHOD, AND PROGRAM**

(30) Priority: 14.07.2016 JP 2016139333
(71) Applicant: Lenovo (Singapore) Pte. Ltd., Singapore 556741 (SG)
(72) Inventor: Luo, Jun, Kanagawa, 2200012 (JP); Itoh, Hiroshi, Kanagawa, 2200012 (JP); Nomura, Ryohta, Kanagawa, 2200012 (JP); Kawano, Seiichi, Kanagawa, 2200012 (JP)
(74) Representative: Leffers, Thomas

(57) **Abstract**

An object is to reduce misoperation that occurs when a user unintentionally touches a touch pad.

A laptop PC includes an OSK in which a keyboard and a touch pad are disposed adjacent to each other. The laptop PC determines an operation state of a user on the keyboard and the touch pad, and based on a determination result, changes an area of a valid region of the touch pad to a first region or a second region narrower than the first region.

## Description

### Field of the Invention

The present invention relates to an information processing device, a misoperation reducing method, and a program.

### Background of the Invention

With recent widespread use of information processing devices including touch panel displays as image display units, an information processing device that enables a key input with a software keyboard (on screen keyboard: OSK, or a screen keyboard) has been developed.

As such an information processing device, Patent Document 1 discloses an information processing device including a mode switching unit for switching a key input mode in which an input from a software keyboard can be performed and a touch pad mode in which an input as a pointing device can be performed.

A software keyboard on which a touch pad and a keyboard are disposed adjacent to each other instead of switching between a key input mode and a touch pad mode has also been developed.

### Citation List

### [Patent Document]

[Patent Document 1] Japanese Patent Application Laid-Open No. 2014-52864

### Summary of the Invention

In the case where the touch pad and the keyboard are adjacent to each other, however, there might arise an error in operation or input in which a palm of a hand touches the touch pad by accident during typing to cause a misoperation or a misinput such as switching of the window due to movement of a pointer (mouse cursor) to a position not intended by a user. In particular, if the touch pad is disposed below the keyboard, a palm or the like touches an upper portion of the touch pad and a misoperation on the touch pad often occurs.

A software keyboard does not have such a step as that of a physical keyboard, and has a flat surface. Thus, it is difficult for a user to recognize the boundary between the keyboard and the touch pad by the sense of touch, and the user hardly notices when a palm or the like touches the touch pad during typing of the keyboard.

The present invention has been made in view of the foregoing problems and has an object of providing an information processing device, a misoperation reducing method, and a program that can reduce a misoperation that occurs when a user unintentionally touches a touch pad.

To solve the problems, an information processing device, a misoperation reducing method, and a program according to the present invention employ the following configurations.

An information processing device according to a first aspect of the present invention is an information processing device in which a keyboard and a touch pad are disposed adjacent to each other and which includes: an operation state determining unit that determines an operation state of a user on at least one of the keyboard or the touch pad; and a valid operating region changing unit that changes an area of a valid operating region of the touch pad based on a determination result of the operation state determining unit.

An information processing device according to a second aspect of the present invention is an information processing device in which a keyboard and a touch pad are disposed adjacent to each other and which includes a valid operating region changing unit that changes a part of a valid operating region of the touch pad including a part adjacent to the keyboard to an invalid operating region in a case where an operation on the keyboard is being performed.

A misoperation reducing method according to a third aspect of the present invention is a misoperation reducing method for an information processing device in which a keyboard and a touch pad are disposed adjacent to each other, and the method includes: a first step of determining an operation state of a user on at least one of the keyboard or the touch pad; and a second step of changing an area of a valid operating region of the touch pad based on a determination result in the first step.

A misoperation reducing method according to a fourth aspect of the present invention is a misoperation reducing method for an information processing device in which a keyboard and a touch pad are disposed adjacent to each other, and in a case where an operation on the keyboard is being performed, a part of a valid operating region of the touch pad including a part adjacent to the keyboard is changed to an invalid operating region.

A program according to a fifth aspect of the present invention is a program causing a computer included in an information processing device in which a keyboard and a touch pad are disposed adjacent to each other to function as: an operation state determining unit that determines an operation state of a user on at least one of the keyboard or the touch pad; and a valid operating region changing unit that changes an area of a valid operating region of the touch pad based on a determination result of the operation state determining unit.

A program according to a sixth aspect of the present invention is a program causing a computer included in an information processing device in which a keyboard and a touch pad are disposed adjacent to each other to function as a valid operating region changing unit that changes a part of a valid operating region of the touch pad including a part adjacent to the keyboard to an invalid operating region in a case where an operation on the keyboard is being performed.

An information processing device according to a seventh aspect of the present invention is an information processing device including: a keyboard; a touch pad; a touch sensor that detects an operation of a user on the touch pad; and a control section that executes an operation with the touch pad in response to detection, by the touch sensor, of a touch on a valid operating region of the touch pad, wherein the control section changes an area of the valid operating region based on at least one of an operation state of a user on the keyboard or an operation state of the user on the touch pad.

A misoperation reducing method according to an eighth aspect of the present invention is a misoperation reducing method for an information processing device including a keyboard, a touch pad, a touch sensor that detects an operation of a user on the touch pad, and a control section that executes an operation with the touch pad in response to detection, by the touch sensor, of a touch on a valid operating region of the touch pad, wherein the control section changes an area of the valid operating region based on at least one of an operation state of a user on the keyboard or an operation state of the user on the touch pad.

A program according to a ninth aspect of the present invention is a program causing a computer included in an information processing device including a keyboard, a touch pad, a touch sensor that detects an operation of a user on the touch pad, and a control section that executes an operation with the touch pad in response to detection, by the touch sensor, of a touch on a valid operating region of the touch pad to implement a function of changing an area of the valid operating region based on at least one of an operation state of a user on the keyboard or an operation state of the user on the touch pad.

The above-described aspects of present invention can provide the advantage of reducing a misoperation that occurs when a user unintentionally touches a touch pad.

### Brief Description of the Drawings

FIG. 1 is a schematic outline view illustrating a laptop PC according to a first embodiment of the present invention.
FIG. 2 is a schematic view illustrating an OSK according to the first embodiment of the present invention.
FIG. 3 is a block diagram illustrating an electrical configuration of the laptop PC according to the first embodiment of the present invention.
FIG. 4 is a schematic view illustrating the OSK according to the first embodiment of the present invention that is in a touch pad switch mode.
FIG. 5 is a functional block diagram related to a touch pad misoperation reducing function according to the first embodiment of the present invention.
FIG. 6 is a flowchart showing a flow of a process of the touch pad misoperation reducing function according to the first embodiment of the present invention.
FIG. 7 is a flowchart showing a flow of a process of a touch pad misoperation reducing function according to a second embodiment of the present invention.
FIG. 8 is a flowchart showing a flow of a process of a touch pad misoperation reducing function according to a third embodiment of the present invention.
FIG. 9 is a flowchart showing a flow of a process of a touch pad misoperation reducing function according to a fourth embodiment of the present invention.
FIG. 10 is a schematic view illustrating a valid operating region of a touch pad according to other embodiments of the present invention.

### Detailed Description of the Invention

An embodiment of an information processing device, a misoperation reducing method, and a program according to the present invention will be described with reference to the drawings.

### First Embodiment

A first embodiment of the present invention will be described.

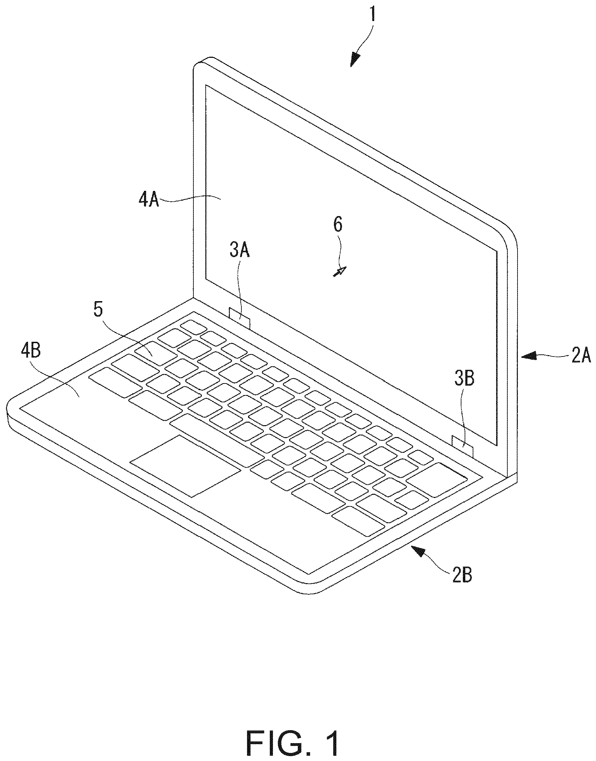

FIG. 1 is a schematic outline view of a laptop PC 1 according to this embodiment.

As illustrated in FIG. 1 as an example, the laptop PC 1 includes a first chassis 2A and a second chassis 2B each of which is substantially rectangular solid.

The first chassis 2A and the second chassis 2B are coupled together by a pair of left and right connecting parts 3A and 3B at ends thereof. The connecting parts 3A and 3B are hinges and support the first chassis 2A and the second chassis 2B so that the first chassis 2A and the second chassis 2B are freely opened and closed.

The first chassis 2A includes a touch panel display 4A. The second chassis 2B includes a touch panel display 4B. In the following description, when the touch panel displays 4A and 4B are distinguished from each other, one of A or B is attached to the end of reference numeral, and otherwise, A and B are omitted.

The touch panel display 4 includes a display screen and a touch sensor. The touch panel display 4 displays, on the display screen, various types of information in accordance with display data converted to video signals, and detects a touch by an indicator such as a finger of a user, a pen, or the like or an approach of the indicator with the touch sensor to thereby accept an operation input with the indicator.

The laptop PC 1 can display a software keyboard (hereinafter referred to as "OSK") 5 on the touch panel display 4, as a user interface for an operation input by the user. In the example of FIG. 1, the touch panel display 4B serves as a secondary monitor and displays the OSK 5. On the other hand, the touch panel display 4A serves as a primary monitor, and displays various application to be operated with the OSK 5, a window, a pointer 6 (also called a mouse cursor), and so forth.

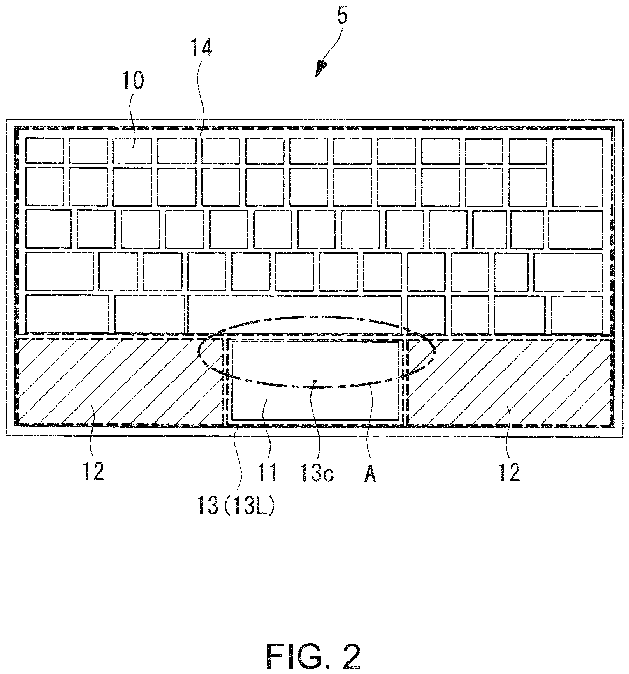

FIG. 2 illustrates a schematic view of the OSK 5. The OSK 5 according to this embodiment includes a keyboard 10 and a touch pad 11.

The keyboard 10 is constituted by various keys for receiving inputs of characters, commands, and so forth.

The touch pad 11 is used by a user with an indicator such as a finger of the user for performing a pointing operation and a tapping operation for moving the pointer 6 displayed on the touch panel display 4A as the primary monitor. As an example, the touch pad 11 is disposed at a user side below the keyboard 10.

In association with an image indicating the keyboard 10, a valid operating region 14 for detecting an input on the keyboard 10 is provided. In association with an image indicating the touch pad 11, a valid operating region 13 for detecting an operation input on the touch pad 11 is provided.

Regions adjacent to the left and right of the touch pad 11 serve as palm rests 12 that are invalid operating regions. Thus, even when the user touches the palm rests 12, the touch panel display 4B does not detect the touch as an operation input.

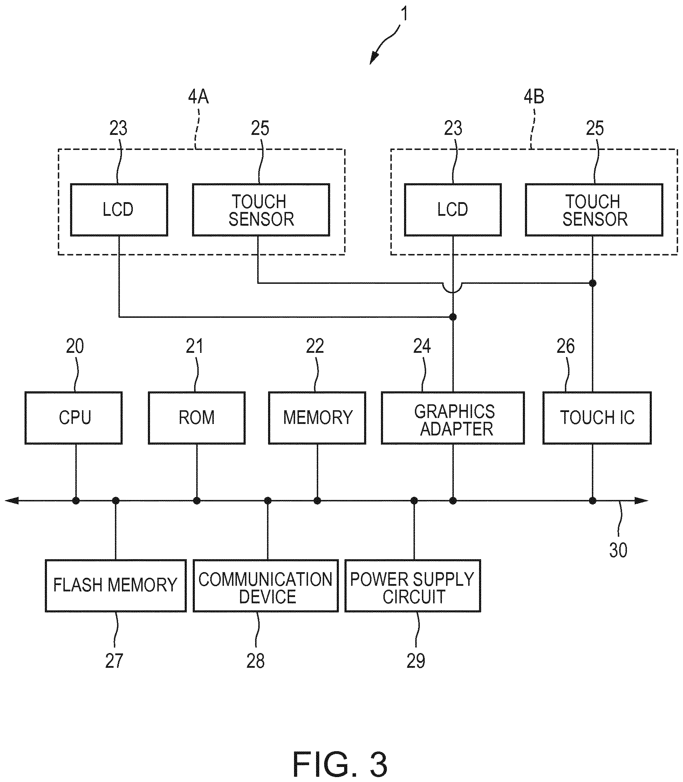

FIG. 3 is a schematic view illustrating a hardware configuration of the laptop PC 1.

The laptop PC 1 includes a central processing unit (CPU) 20, a read only memory (ROM) 21, a memory 22, a liquid crystal display (LCD) 23, a graphics adapter 24, a touch sensor 25, a touch (integrated circuit) IC 26, a flash memory 27, a communication device 28, and a power supply circuit 29. These components are connected to one another directly or indirectly through buses 30. Each of the touch panel displays 4A and 4B includes the LCD 23 and the touch sensor 25.

The CPU 20 has the functions of controlling the entire laptop PC 1 by using an operating system (OS) stored in the flash memory 27 and of executing processes in accordance with a user's operation through, for example, the touch panel display 4 based on various programs stored in the flash memory 27.

The ROM 21 stores a basic input/output system (BIOS), various types of data, and so forth.

The memory 22 is constituted by a cache memory or a random access memory (RAM), and is a writable memory that is used as a work area where reading of an execution program of the CPU 20 and writing of processing data based on the execution program are performed.

Based on control by the CPU 20, the LCD 23 displays a video signal from the graphics adapter 24 as an image.

The graphics adapter 24 converts the displayed information to a video signal and outputs the video signal to the LCD 23, based on the control of the CPU 20.

The touch sensor 25 detects a touch position of a finger of the user, a touch pen, or the like on the LCD 23, and outputs the detected position to the touch IC 26. The touch sensor 25 receives selections of screen objects such as various menus, icons, buttons, and a keyboard displayed on the screen of the LCD 23, operation inputs such as a text input and screen operation of, for example, scrolling and swiping, and user's operations on the keyboard 10 and the touch pad 11, by detecting a touch with the user's finger, the touch pen, or the like.

The touch IC 26 performs various processes by execution of programs stored in, for example, the ROM 21 by the processor to control an operation of the touch sensor 25. That is, the touch IC 26 is a control section that executes an operation with the touch pad 11 in response to detection, by the touch sensor 25, of a touch on the valid operating region 13 of the touch pad 11.

The flash memory 27 has the functions of storing an OS for controlling the entire laptop PC 1, various drivers for hardware operation of various types of peripheral equipment, applications for specific operations, various items of data, files, and so forth. The laptop PC 1 may include other storage units such as a hard disk drive (HDD), instead of the flash memory 27.

The communication device 28 communicates with other external devices.

The power supply circuit 29 includes an AC adapter, an intelligent battery, a charger for charging the intelligent battery, a DC/DC converter, and so forth, and supplies electric power to the devices in accordance with control of the CPU 20.

Here, the OSK 5 does not have a step at the boundary between the keyboard 10 and the touch pad 11 (region A enclosed by a chain line in FIG. 2), that is, has a flat surface. Thus, while the user is typing the keyboard 10, even if the user touches the touch pad 11 with a palm of the user or the like, the user hardly notices the touch. Consequently, an unintended input is made on the touch pad 11 so that a misoperation might occur.

In view of this, to reduce the misoperation, the laptop PC 1 has a touch pad misoperation reducing function of changing the area of the valid operating region 13 of the touch pad 11.

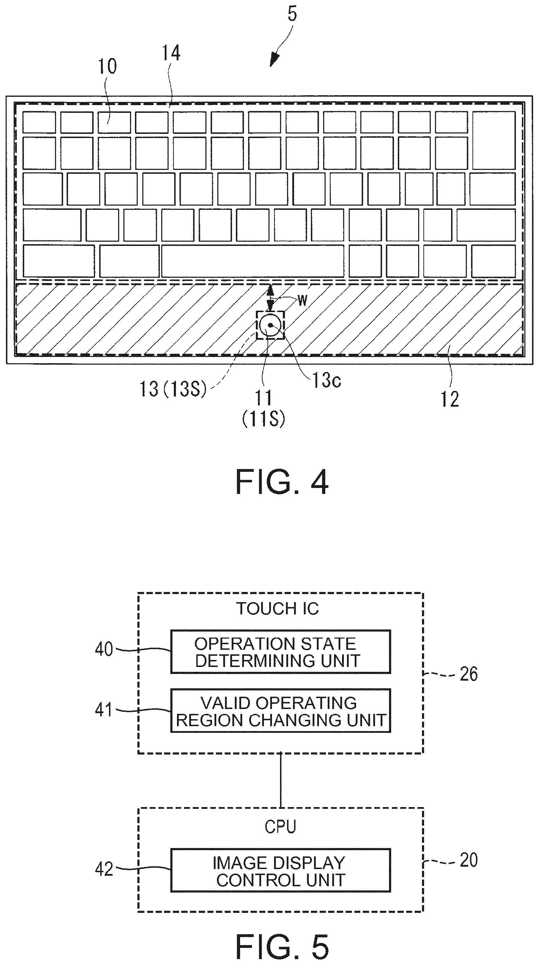

More specifically, the area of the valid operating region 13 of the touch pad 11 changes to a first region 13L or a second region 13S narrower than the first region 13L. The first region 13L is the valid operating region 13 illustrated in FIG. 2. The second region 13S is the valid operating region 13 illustrated in FIG. 4. A part of the first region 13L not included in the second region 13S becomes an invalid operating region (a part of the palm rest 12). Even if the user touches this invalid operating region, the touch panel display 4B does not detect the touch as an operation input.

In the example illustrated in FIG. 4, the area of the valid operating region 14 of the keyboard 10 does not change. Thus, when the valid operating region 13 of the touch pad 11 changes to the second region 13S, the palm rest 12 enlarges.

That is, in the case where the user performs an operation on the touch pad 11, the laptop PC 1 according to this embodiment reduces the area of the valid operating region 13 of the touch pad 11 so that a misoperation caused by a user's unintentional touch on the touch pad 11 can be reduced. On the other hand, in the case where the user performs an operation on the touch pad 11, the laptop PC 1 enlarges the valid operating region 13 of the touch pad 11 so that an operability of the touch pad 11 is not impaired.

In the following description, the touch pad 11 in which the area of the valid operating region 13 is the second region 13S will be also referred to as a touch pad switch 11S. An image on the touch pad 11 that is displayed on the touch panel display 4B when the valid operating region 13 becomes the second region 13S is also an image representing the touch pad switch 11S smaller than the touch pad 11. In the examples illustrated in FIGS. 2 and 4, the image representing the touch pad 11 is rectangular, whereas the image representing the touch pad switch 11S is circular. In this manner, the user can intuitively know that the area of the valid operating region 13 of the touch pad 11 has become small.

The center positions 13c of the first region 13L and the second region 13S coincide with each other. In this manner, a gap w between the keyboard 10 and the touch pad 11 is enlarged so that an unintentional input on the touch pad 11 can be further reduced. To start an operation on the touch pad 11, a contact (touch) of a finger on substantially the center of the touch pad 11 is a natural operation for a general user. In view of this, the center positions 13c of the first region 13L and the second region 13S are made to coincide with each other so that operability on the touch pad 11 is not impaired even when the area of the valid operating region 13 of the touch pad 11 changes.

As described above, the first region 13L and the second region 13S are the valid operating regions 13 having the same center position 13c and different areas. The first region 13L and the second region 13S may have similar shapes or different shapes.

A state in which the valid operating region 13 of the touch pad 11 is the first region 13L will be hereinafter referred to as a touch pad mode, and a state in which the valid operating region 13 of the touch pad 11 is the second region 13S will be hereinafter referred to as a touch pad switch mode.

FIG. 5 is a functional block diagram related to the touch pad misoperation reducing function.

The touch IC 26 includes an operation state determining unit 40 and a valid operating region changing unit 41. The CPU 20 includes an image display control unit 42.

The operation state determining unit 40 determines an operation state of the user on the keyboard 10 and the touch pad 11. The operation state on the keyboard 10 includes, for example, a state in which the user is typing the keyboard 10, a state in which the user is not typing the keyboard 10, and a state in which the user is performing a predetermined key input. In this embodiment, a state from when start of typing is recognized until when operation start on the touch pad is recognized is defined as the "state in which the user is typing" and a state from when start of operation of the touch pad is recognized until when start of typing is recognized is defined as the "state in which the user is not typing." The operation state on the touch pad 11 includes, for example, a state in which the user is operating the touch pad 11 and a state in which the user is not operating the touch pad 11. In this embodiment, a state from when start of operation of the touch pad is recognized until when start of typing is recognized is defined as the "state in which the user is operating the touch pad 11" and a state from when start of typing is recognized until when start of operation of the touch pad is recognized is defined as the "state in which the user is not operating the touch pad 11." In addition, the operation state determining unit 40 also determines, as an operation state, a state in which the touch panel display 4A is operated with a touch pen.

The valid operating region changing unit 41 changes the area of the valid operating region 13 of the touch pad 11 based on a determination result of the operation state determining unit 40. Specifically, the valid operating region changing unit 41 changes the valid operating region 13 to the second region 13S in a state in which the user is typing the keyboard 10, and changes the valid operating region 13 to the first region 13L in a state in which the user is performing an operation on the touch pad 11.

As described above, in the case where the user is performing an operation on the keyboard 10, the valid operating region changing unit 41 changes a part of the valid operating region 13 of the touch pad 11 including a part adjacent to the keyboard 10, to the invalid operating region. As an example, the invalid operating region in this embodiment is a region where the touch sensor 25 does not react (sense) even when the user touches this region. That is, in the invalid operating region according to this embodiment, the touch sensor 25 does not execute detection of a touch with a user's finger, a touch pen, or the like itself.

The image display control unit 42 switches an image of the touch pad 11 displayed on the touch panel display 4B in accordance with the touch pad switch mode or the touch pad mode. In the touch pad switch mode, the image display control unit 42 does not display the pointer 6 on the touch panel display 4A.

In the above description, the operation state determining unit 40 and the valid operating region changing unit 41 are provided in the touch IC 26 in order to increase the processing speeds thereof. The present invention, however, is not limited to this example, and the functions of the operation state determining unit 40 and the valid operating region changing unit 41 may be executed by the CPU 20.

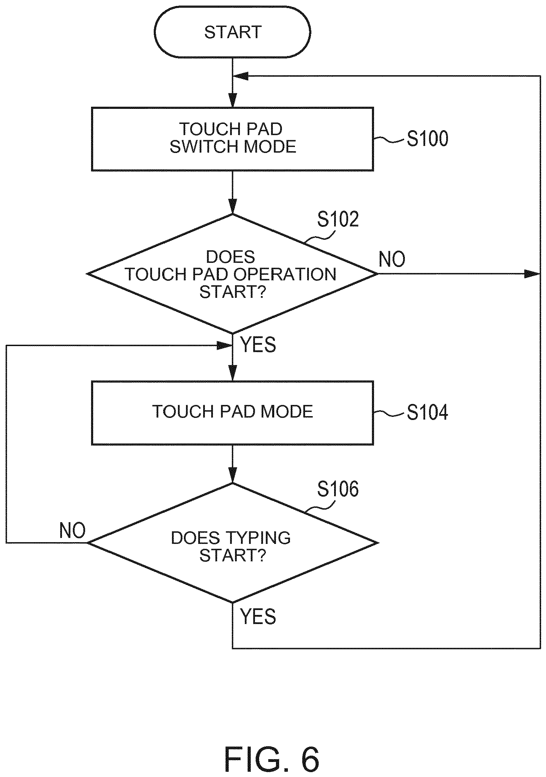

FIG. 6 is a flowchart showing a flow of a process of the touch pad misoperation reducing function according to this embodiment. This process starts when the OSK 5 is activated, and ends when the OSK 5 is finished.

First, in step 100, the touch pad switch mode is selected.

In the touch pad switch mode, the pointer 6 is not displayed on the touch panel display 4A. By erasing the display of the pointer 6 in the touch pad switch mode, the user is not conscious of the position of the pointer 6 when the user starts an operation on the touch pad 11. In this manner, the user puts a finger on the center position 13c of the touch pad 11, that is, the touch pad switch 11S, and starts an operation on the touch pad 11 without consciousness of the position of the pointer 6.

In next step 102, it is determined whether the touch pad switch 11S is touched or not to thereby determine whether an operation on the touch pad 11 is started or not. If yes, the process proceeds to step 104. On the other hand, if no, the current state is the state in which typing is performed on the keyboard 10 or the state in which typing is not performed. Thus, the process returns to step 100, and the touch pad switch mode continues.

In step 104, the touch pad switch mode is switched to the touch pad mode. In the touch pad mode, the valid operating region 13 of the touch pad 11 changes from the second region 13S to the first region 13L. At the same time, the image of the touch pad switch 11S changes to the touch pad 11. In addition, the pointer 6 is also displayed on the touch panel display 4A. The initial display position of the pointer 6 may be at the center of the touch panel display 4A or the display of the pointer 6 may start again at the position where the display of the pointer 6 was erased.

In next step 106, it is determined whether typing on the keyboard 10 is started or not. If yes, the process returns to step 100, and the touch pad mode is switched to the touch pad switch mode. On the other hand, if no, the process returns to step 104, and the touch pad mode continues. In the touch pad switch mode, the valid operating region 13 of the touch pad 11 changes from the first region 13L to the second region 13S. At the same time, the image of the touch pad 11 changes to the touch pad switch 11S. In addition, the pointer 6 is erased form the touch panel display 4A.

As described with reference to the flow of FIG. 6, the laptop PC 1 dynamically switches between the touch pad switch mode and the touch pad mode in accordance with an operation state of the user on the OSK 5.

The operation input includes a combination of a predetermined key input (e.g., input to a Ctrl key, a Shift key, a Function key, or the like) and an operation on the touch pad 11. In the case of performing such an operation, if the touch pad switch mode is selected, operability to the user is poor.

In view of this, in the state in which a key for performing an operation input in combination with an operation on the touch pad 11, the laptop PC 1 sets the valid operating region 13 as the first region 13L. That is, even when a key input is performed on the keyboard 10, if this key input is the predetermined key input, the mode does not switch to the touch pad switch mode, and the touch pad mode continues. Even in the touch pad switch mode, when the predetermined key input is performed, the touch pad switch mode is switched to the touch pad mode.

In a state where the user is performing a touch operation with an indicator such as a finger or a touch pen on the touch panel display 4A as the primary monitor, the OSK 5 does not accept any of operations to the keyboard 10 and the touch pad 11. In this manner, it is possible to prevent misoperation from occurring when the user performing a touch operation on the touch panel display 4A erroneously touches the OSK 5 with, for example, a hand or an arm.

Furthermore, the laptop PC 1 may have a big touch pad mode that causes the entire OSK 5, that is, the regions of the keyboard 10 and the palm rests 12 to function as the touch pad 11 so that when a predetermined input is performed, the laptop PC 1 switches from the touch pad mode or the touch pad switch mode to the big touch pad mode. In this manner, the valid operating region 13 serving as the touch pad 11 is enlarged so that operability to the touch pad 11 can be enhanced.

As described above, the laptop PC 1 according to the first embodiment includes the OSK 5 in which the keyboard 10 and the touch pad 11 are disposed adjacent to each other. The laptop PC 1 determines an operation state of a user on the keyboard 10 and the touch pad 11 and, based on the determination result, changes the area of the valid operating region 13 of the touch pad 11.

Thus, the laptop PC 1 according to this embodiment can reduce misoperation that occurs when the user unintentionally touches the touch pad 11.

### Second Embodiment

A second embodiment of the present invention will now be described.

A configuration of a laptop PC 1 according to this embodiment is similar to the configuration of the laptop PC 1 according to the first embodiment illustrated in FIGS. 1 through 5, and thus, description thereof will be omitted.

The laptop PC 1 according to this embodiment determines an operation state of a user on the touch pad 11, and based on the determination result, switches between touch pad switch mode and the touch pad mode. Specifically, an operation state determining unit 40 according to this embodiment determines the operation state of the user on the touch pad 11 but does not determine an operation state on the keyboard 10.

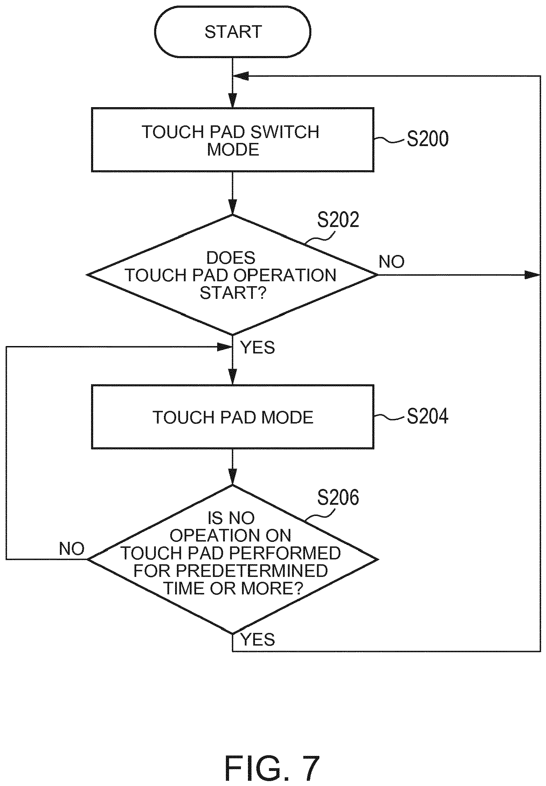

FIG. 7 is a flowchart showing a flow of a process of a touch pad misoperation reducing function according to this embodiment. This process starts when an OSK 5 is activated, and ends when the OSK 5 is finished.

First, in step 200, the touch pad switch mode is selected.

In next step 202, it is determined whether a touch pad switch 11S is touched or not to thereby determine whether an operation on the touch pad 11 is started or not. If yes, the process proceeds to step 204. On the other hand, if no, the process returns to step 200, and the touch pad switch mode continues.

In step 204, the touch pad switch mode is switched to the touch pad mode.

In next step 206, it is determined whether or not an operation on the touch pad 11 is not performed for a predetermined time (e.g., 10 seconds) or more. If yes, there is a possibility that a user is performing an operation on the keyboard 10, and thus, the process returns to step 200, and the touch pad mode is switched to the touch pad switch mode. On the other hand, if no, it is determined that the user is performing an operation on the touch pad 11, the process returns to step 204, and the touch pad mode continues.

### Third Embodiment

A third embodiment of the present invention will now be described.

A configuration of a laptop PC 1 according to this embodiment is similar to the configuration of the laptop PC 1 according to the first embodiment illustrated in FIGS. 1 through 5, and thus, description thereof will be omitted.

The laptop PC 1 according to this embodiment determines an operation state of a user to a keyboard 10 and a touch pad 11, and based on the determination result, switches between a touch pad switch mode and a touch pad mode.

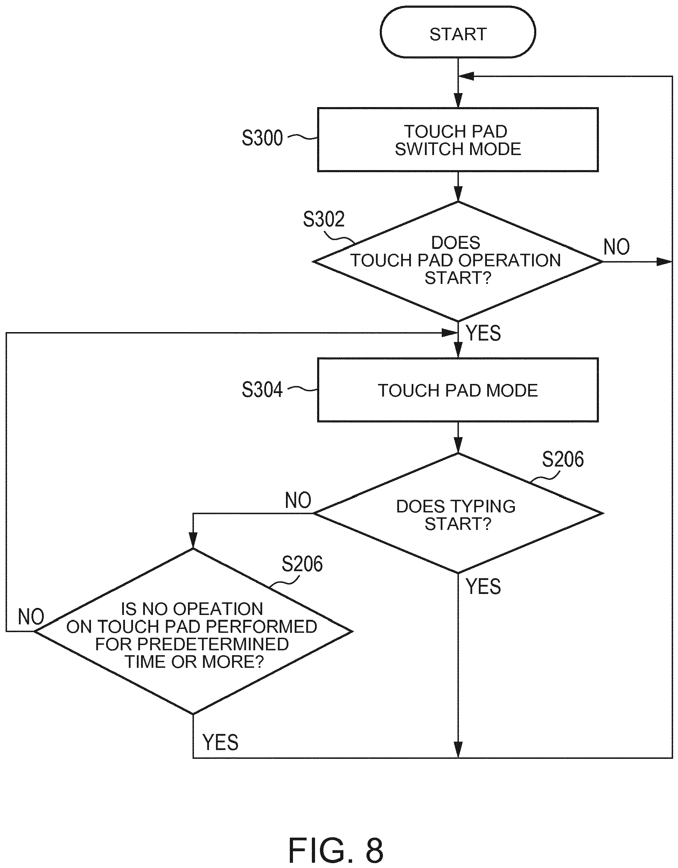

FIG. 8 is a flowchart showing a flow of a process of a touch pad misoperation reducing function according to this embodiment. This process starts when an OSK 5 is activated, and ends when the OSK 5 is finished.

First, in step 300, the touch pad switch mode is selected.

In next step 302, it is determined whether a touch pad switch 11S is touched or not to thereby determine whether an operation on the touch pad 11 is started or not. If yes, the process proceeds to step 304. On the other hand, if no, the process returns to step 300, and the touch pad switch mode continues.

In step 304, the touch pad switch mode is switched to the touch pad mode.

In next step 306, it is determined whether typing on the keyboard 10 is started or not. If yes, the process returns to step 300, and the touch pad mode is switched to the touch pad switch mode. On the other hand, if no, the process proceeds to step 308.

In step 308, it is determined whether or not an operation on the touch pad 11 is not performed for a predetermined time (e.g., 10 seconds) or more. If yes, there is a possibility that a user is performing an operation on the keyboard 10, and thus, the process returns to step 300, and the touch pad mode is switched to the touch pad switch mode. On the other hand, if no, it is determined that the user is performing an operation on the touch pad 11, the process returns to step 304, and the touch pad mode continues.

### Fourth Embodiment

A fourth embodiment of the present invention will now be described.

A configuration of a laptop PC 1 according to this embodiment is similar to the configuration of the laptop PC 1 according to the first embodiment illustrated in FIGS. 1 through 5, and thus, description thereof will be omitted.

The laptop PC 1 according to this embodiment starts when an OSK 5 is in a touch pad mode.

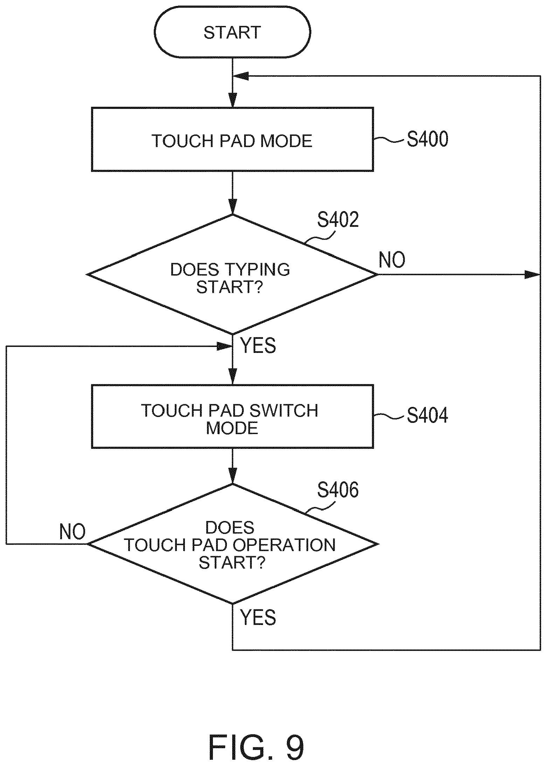

FIG. 9 is a flowchart showing a flow of a process of a touch pad misoperation reducing function according to this embodiment. This process starts when the OSK 5 is activated, and ends when the OSK 5 is finished.

First, in step 400, the touch pad mode is selected.

In next step 402, it is determined whether typing on the keyboard 10 is started or not. If yes, the process proceeds to step 404. On the other hand, if no, the process returns to step 400, and the touch pad mode continues.

In step 404, the touch pad mode is switched to a touch pad switch mode.

In next step 406, it is determined whether a touch pad switch 11S is touched or not to thereby determine whether an operation on the touch pad 11 is started or not. If yes, the process returns to step 400. On the other hand, if no, the process returns to step 404, and the touch pad switch mode continues.

As a variation of this embodiment, the determination process in step 406 of the flowchart depicted in FIG. 9 may be a determination process in which it is determined whether or not an operation on the keyboard 10 is not performed for a predetermined time (e.g., 10 seconds) or more and, if yes, the process returns to step 400, and if no, the process returns step 404. That is, the operation state determining unit 40 in this variation determines an operation state of the user on the keyboard 10 but does not determine an operation state on the touch pad 11.

The present invention has been described with reference to the embodiments. The technical scope of the present invention, however, is not limited to the range described in the above embodiments. Various changes and modifications may be made on the embodiments within the range of the gist of the invention, and embodiments obtained by such changes or modifications are included in the technical scope of the invention. The embodiments may be suitably combined.

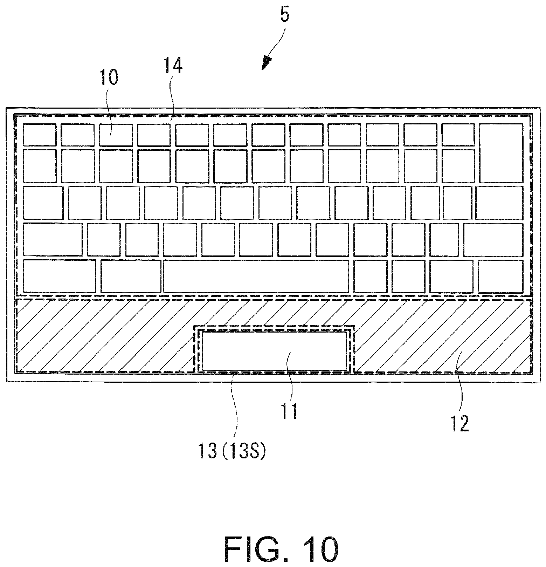

For example, in the above embodiments, the touch pad 11 has the same center position 13c even when the valid operating region 13 changes. The present invention, however, is not limited to this example, and the touch pad 11 may not have the same center position 13c when the valid operating region 13 changes. In this case, as illustrated in an example of FIG. 10, the valid operating region 13 of the touch pad 11 may be narrow at the side opposite to the keyboard 10 (i.e., at the user side) so that a part of the region including a part adjacent to the keyboard 10 is an invalid operating region.

In the above embodiments, the invalid operating region is a region where the touch sensor 25 does not react. The present invention, however, is not limited to this example. The invalid operating region may be, for example, a region where the touch sensor 25 reacts (senses) with a touch on this region but the touch IC 26 or the CPU 20 does not output an instruction of executing an operation such as moving of the pointer 6. In this case, if the OSK 5 is in the touch pad switch mode, since the touch sensor 25 detects an operation input, the touch pad switch mode may be switched to the touch pad mode when a continuous touch (e.g., a touch for two seconds or more) is made on the invalid operating region as well as when a touch is made on the touch pad switch 11S.

In the foregoing embodiments, the present invention is applied to the OSK 5. The present invention, however, is not limited to this example, and may be applied to a physical keyboard in which a keyboard 10 and a touch pad 11 are disposed adjacent to each other. In this case, a message indicating switching of a mode may be displayed on the display so as to enable a user to recognize switching between the touch pad switch mode and the touch pad mode.

In the above embodiments, the touch pad 11 is disposed below the keyboard 10. The present invention, however, is not limited to this example, and the touch pad 11 may be disposed adjacent to the right or left of the keyboard 10.

In the above embodiments, the present invention is applied to the laptop PC 1 including the two touch panel displays 4. The present invention, however, is not limited to this example, and may be applied to an information processing device including one touch panel display, such as a touch pad.

The present invention is also applicable to a flat keyboard that is a flat-surface keyboard externally connected to an information processing device such as a touch pad through an USB port. This flat keyboard is constituted by, for example, a touch panel, and can display a software keyboard. In this case, the touch pad switch 11S may be always displayed by printing, irrespective of the mode, or the position of the touch pad switch 11S may emit light by using a light emitting diode (LED) when the mode is switched to the touch pad switch mode.

In addition, the flows of the processes of the touch pad misoperation reducing function described in the above embodiments are examples. Unnecessary steps may be eliminated, new steps may be added, and/or steps may be performed in different orders within the gist of the invention.

### [Description of Symbols]

1: laptop PC 1 (information processing device)
4: touch panel display
5: software keyboard
6: pointer
10: keyboard
11: touch pad
13: valid operating region
13L: first region
13S: second region
13c: center position
20: CPU (control section)
25: touch sensor
26: touch IC (control section)
40: operation state determining unit (operation state determining unit)
41: valid operating region changing unit (valid operating region changing unit)

## Claims

1. An information processing device comprising:
a keyboard;
a touch pad disposed adjacent to the keyboard;
an operation state determining unit that is configured to determine if a user is operating at least one of the keyboard or the touch pad; and
a valid operating region changing unit that is configured to change an area of a valid operating region of the touch pad based on a determination result of the operation state determining unit.

2. An information processing device comprising
a keyboard;
a touch pad disposed adjacent to the keyboard; and
a valid operating region changing unit that changes a part of a valid operating region of the touch pad including a part adjacent to the keyboard to an invalid operating region in a case where an operation on the keyboard is being performed.

3. The information processing device according to claim 1 or 2, further comprising:
a touch panel display that is configured to display an image, the keyboard and the touch pad being displayed on the touch panel display, the valid operating region being provided on the touch panel display; and
a display control unit that is configured to change an area of the touch pad displayed on the touch panel display in accordance with a change in the area of the valid operating region.

4. The information processing device according to any one of claims 1 to 3, wherein
the valid operating region changing unit is configured to change the area of the valid operating region to a first region or a second region narrower than the first region.

5. The information processing device according to claim 4, wherein
the valid operating region changing unit is configured to change the valid operating region to the second region in a state where an operation on the keyboard is being performed.

6. The information processing device according to claim 4 or 5, wherein
the valid operating region changing unit changes the valid operating region to the first region in a state where an operation on the touch pad is being performed.

7. The information processing device according to any one of claims 4 to 6, wherein
the valid operating region changing unit changes the valid operating region to the first region in a state where a key with which an operation input is performed is pressed in combination with an operation on the touch pad.

8. The information processing device according to any one of claims 4 to 7, wherein
center positions of the first region and the second region coincide with each other.

9. The information processing device according to any one of claims 1 to 8, further comprising:
a display that is configured to display a pointer to be operated with the touch pad; and
a display control unit that does not display a pointer on the display in a state where the valid operating region is narrow.

10. The information processing device according to any one of claims 1 to 9, further comprising
a touch panel display that is configured to receive an input of a touch operation with an indicator, wherein
an operation on any of the keyboard and the touch pad is invalid in a state where a user is performing the touch operation.

11. A misoperation reducing method for an information processing device in which a keyboard and a touch pad are disposed adjacent to each other, the method comprising:
a first step of determining if a user is operating at least one of the keyboard or the touch pad; and
a second step of changing an area of a valid operating region of the touch pad based on a determination result in the first step.

12. A misoperation reducing method for an information processing device in which a keyboard and a touch pad are disposed adjacent to each other, wherein
in a case where an operation on the keyboard is being performed, a part of a valid operating region of the touch pad including a part adjacent to the keyboard is changed to an invalid operating region.

13. An information processing device comprising:
a keyboard;
a touch pad;
a touch sensor that is configured to detect an operation of a user on the touch pad; and
a control section that is configured to execute an operation with the touch pad in response to detection, by the touch sensor, of a touch on a valid operating region of the touch pad, wherein
the control section is configured to change an area of the valid operating region based on at least one of an operation state of the user on the keyboard or an operation state of the user on the touch pad.

14. The information processing device according to claim 13, further comprising:
a touch panel display that is configured to display an image, the keyboard and the touch pad being displayed on the touch panel display, the touch sensor being provided on the touch panel display; and
a display control unit that is configured to change an area of the touch pad displayed on the touch panel display in accordance with a change in the area of the valid operating region.

15. A misoperation reducing method for an information processing device including a keyboard, a touch pad, a touch sensor that detects an operation of a user on the touch pad, and a control section that executes an operation with the touch pad in response to detection, by the touch sensor, of a touch on a valid operating region of the touch pad, wherein
the control section changes an area of the valid operating region based on at least one of an operation state of the user on the keyboard or an operation state of the user on the touch pad.
